# EUROPÄISCHE PATENTSCHRIFT

(11) **EP 4 136 824 B1**
(45) Veröffentlichungstag und Bekanntmachung des Hinweises auf die Patenterteilung: **28.02.2024**
(21) Anmeldenummer: 21735176.6
(22) Anmeldetag: 09.06.2021
(51) Int. Cl.: H04L 67/141, H04L 67/125, H04L 67/00, H04L 67/04

(54) **GERÄT ZUM EINSATZ IM INTERNET DER DINGE**
DEVICE FOR USE IN THE INTERNET OF THINGS
DISPOSITIF DESTINÉ À ÊTRE UTILISÉ DANS L'INTERNET DES OBJETS

(30) Priorität: 17.06.2020 DE 102020207498
(43) Veröffentlichungstag der Anmeldung: 22.02.2023
(73) Patentinhaber: Siemens Aktiengesellschaft, 80333 München (DE)
(72) Erfinder: GRILLENBERGER, Michael, 90427 Nürnberg (DE); KIEPFER, Andreas, 91056 Erlangen (DE)
(74) Vertreter: Siemens Patent Attorneys
(86) Internationale Anmeldenummer: PCT/EP2021/065443
(87) Internationale Veröffentlichungsnummer: WO 2021/254842

(56) Entgegenhaltungen:
- WO-A1-2021/021635
- US-A1- 2020 050 753
- US-A1- 2020 413 249

## Beschreibung

Das Internet der Dinge (englisch Internet of Things, IOT) ist ein System, in dem Dinge - Geräte - über ein Netzwerk, typischerweise das Internet, zusammengeschlossen sind und einen Datenaustausch untereinander durchführen können. Im industriellen Umfeld geht es bei diesem Datenaustausch beispielsweise um die Abgabe von Messdaten durch Maschinen und das Sammeln und Auswerten dieser Messdaten durch Programme.

Im Gegensatz zu einem lokalen Sammeln von Daten beispielsweise in einer Fabrikanlage bietet das Internet der Dinge die Möglichkeit, Daten unabhängig von ihrem Entstehungsort aufzunehmen. Gleichzeitig bieten Plattformen für das Internet der Dinge auch den Vorteil, dass die von Geräten gelieferten Daten von ihrer konkreten Darstellung durch das sendende Gerät entkoppelt werden und so eine weitgehende Interoperabilität zwischen Geräten verschiedenster Typen, Baujahre oder Hersteller ermöglicht wird.

Geräte, die mit dem Internet der Dinge kommunizieren oder ein Teil des Internets der Dinge sein sollen, werden in der Regel mit einer übergeordneten Struktur verbunden, beispielsweise mit einem internetbasierten Cloudservice. Von solchen internetbasierten Cloud-Services existiert mittlerweile eine ganze Reihe, beispielsweise Amazon Web Services (Amazon), Azure (Microsoft) oder Mindsphere (Siemens). Alternativ zu einer rein internet-basierten übergeordneten Struktur in Form eines Cloud-Services kann die übergeordnete Struktur aber auch ein lokaler Server sein.

Die übergeordnete Struktur, zu der Verbindung aufgenommen wird, wird dabei bei solchen Geräten, die einen Mikrocontroller aufweisen und mittels einer Firmware für den Mikrocontroller gesteuert werden, in der initialen Firmware festgelegt. Eine Änderung der übergeordneten Struktur wird im Rahmen eines Firmwareupdates durchgeführt, also mit einer signifikanten Änderung der Betriebssoftware.

Aus der US 2020/0050753 A1 ist ein Leistungssteuergerät mit einem Mikrocontroller bekannt. Das Leistungssteuergerät hat ein Betriebssystem mit einer Firmware-Komponente, die wenigstens einen als Sandbox ausgestalteten Software-Plugin-Platz umfasst, der zur Aufnahme eines Software-Plugins mit einem Kommunikationsprotokoll ausgestaltet ist.

Aus der US 2020/0413249 A1 sind Systeme und Verfahren für den Umgang mit Identitätsdaten und der Authentifizierung im Zusammenhang mit SIM-Karten bekannt.

Aus der WO 2021/021635 A1 ist ein System zur Verbindung eines Steuergeräts mit einem Cloud-Service bekannt.

Es ist Aufgabe der vorliegenden Erfindung, ein System zum Einsatz im Internet der Dinge anzugeben, das den genannten Nachteil vermeidet, insbesondere einen vereinfachten Wechsel zu einer anderen übergeordneten Struktur ermöglicht. Eine weitere Aufgabe besteht in der Angabe eines entsprechenden Verfahrens, mit dem insbesondere ein vereinfachter Wechsel zu einer anderen übergeordneten Struktur ermöglicht wird.

Diese Aufgabe wird hinsichtlich des Systems durch ein System für den Einsatz im Internet der Dinge nach Anspruch 1 gelöst. Hinsichtlich des Verfahrens besteht eine Lösung in dem Verfahren mit den Merkmalen von Anspruch 11.

Das erfindungsgemäße System umfasst ein Gerät zum Einsatz im Internet der Dinge sowie ein auslösendes Gerät, wobei das Gerät zum Einsatz im Internet der Dinge eine Kommunikations-Schnittstelle und einen Konfigurationsspeicher umfasst. Als Steuereinheit zur Steuerung der Kommunikations-Schnittstelle umfasst das Gerät einen Mikrocontroller mit einer Firmware.

Die Steuereinheit des Geräts ist ausgestaltet, eine Verbindung mit einem ersten Cloud-Service basierend auf einer im Konfigurationsspeicher gespeicherten Konfiguration aufzunehmen.

Weiterhin ist die Steuereinheit des Geräts ausgestaltet, einen Steuerbefehl zu empfangen und auf diesen Empfang folgend eine Verbindung zu einem zweiten Cloud-Service herzustellen. Das auslösende Gerät ist ausgestaltet, den Steuerbefehl an das Gerät zu übertragen.

Bei dem Mikrocontroller (englisch microcontroller unit, MCU) handelt es sich um einen typischerweise in Geräten als Steuereinheit eingesetzten Chip mit einer Taktfrequenz von weniger als 1GHz, insbesondere weniger als 300 MHz und einem damit verbundenen flüchtigen Speicher (RAM) von insbesondere weniger als 16 MB. Mit anderen Worten handelt es sich nicht um einen wesentlichen leistungsfähigeren Mikroprozessor (microprocessor unit, MPU), wie er typischerweise in PCs und verwandten Geräten zum Einsatz kommt. Der Konfigurationsspeicher, der ein nicht-flüchtiger Speicher ist, ist daher von begrenzter Größe, insbesondere kleiner als 16 MB. Der Mikrocontroller umfasst bevorzugt Ein-/Ausgabeschnittstellen, einen ROM (read-only memory) und den RAM (random access memory) und ist ausgestaltet für den Einsatz als eingebettetes System (engl. embedded).

Bei der Kommunikationsschnittstelle handelt es sich um eine Schnittstelle, die eine Verbindung zum Cloud-Service erlaubt. Diese Verbindung kann beispielsweise eine direkte oder indirekte Verbindung zum Internet sein. Die Kommunikationsschnittstelle kann also eine Ethernet-LAN-Schnittstelle oder eine WLAN-Schnittstelle sein oder eine nach einem anderen Prinzip arbeitende Schnittstelle.

Vorteilhaft ist das Gerät also in der Lage, auf einen Steuerbefehl hin eine Verbindung mit diesem zweiten Cloud-Service aufzunehmen. Dabei ist eine Änderung der Firmware, die eine entsprechende Änderung der Konfigurationsdaten umfasst, unnötig. Dadurch wird der Aufwand zur Änderung der Anbindung an den Cloud-Service deutlich vereinfacht.

Weitere vorteilhafte Ausgestaltungen des erfindungsgemäßen Geräts gehen aus den von Anspruch 1 abhängigen Ansprüchen hervor. Dabei können die Ausführungsformen der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen sein:
Die Steuereinheit kann ausgestaltet sein, nach der Verbindungsaufnahme mit dem ersten Cloud-Service im Betrieb anfallende Daten mit dem ersten Cloud-Service uni- oder bidirektional auszutauschen, und nach der Verbindungsaufnahme mit dem zweiten Cloud-Service im Betrieb anfallende Daten mit dem zweiten Cloud-Service uni- oder bidirektional auszutauschen. Mit anderen Worten werden mit beiden Cloud-Services im Betrieb anfallende Daten ausgetauscht. Es ist also zu beachten, dass es sich bei den Cloud-Services nicht etwa um provisioning services handelt, die lediglich einer Ersteinrichtung des Geräts dienen. Vielmehr handelt es bei den Cloud-Services um solche Dienste, mit denen das Gerät längerfristig Verbindung aufnimmt oder aufnehmen möchte, um im Betrieb anfallende Daten auszutauschen.

Die Steuereinheit kann weiterhin ausgestaltet sein, nach der Verbindungsaufnahme mit dem ersten Cloud-Service Betriebsdaten zu dem ersten Cloud-Service zu senden, und nach der Verbindungsaufnahme mit dem zweiten Cloud-Service Betriebsdaten zum zweiten Cloud-Service zu senden, wobei die Betriebsdaten ausgewählt sind aus der nicht abschließenden Liste: Messdaten, Zeitstempel, Berechnungsergebnisse und Ansteuerbefehlsdaten für Aktoren und/oder Schnittstellen. Die Cloud-Services verarbeiten also im Gegensatz zu provisioning services Betriebsdaten des Geräts, beispielsweise Messdaten.

Die Steuereinheit kann ausgestaltet sein, vor der Verbindungsaufnahme mit dem ersten Cloud-Service Verbindung zu einem Kommissionierungs-Server, auch als provisioning service bezeichnet, aufzunehmen und von dem Kommissionierungs-Server Adressdaten und/oder kryptographische Daten zu empfangen und basierend auf den Adressdaten und/oder kryptographischen Daten die Verbindung zum ersten Cloud-Service aufzunehmen.

Alternativ kann die Steuereinheit ausgestaltet sein, die Verbindungsaufnahme mit dem ersten Cloud-Service basierend auf einer im Konfigurationsspeicher gespeicherten Konfiguration vorzunehmen.

Die Steuereinheit des Geräts ist efindungsgemäß ausgestaltet, mit dem Steuerbefehl Adressdaten für den zweiten Cloud-Service zu empfangen und die Verbindung zum zweiten Cloud-Service unter Verwendung der Adressdaten herzustellen. Solche Adressdaten können beispielsweise eine URL (uniform resource locator) des Internets sein. Dadurch wird die Veränderung des angebundenen Cloud-Service flexibel und zukunftssicher, da die Adressdaten nicht zum Zeitpunkt der Erstellung der initialen Firmware festgelegt werden müssen und somit nachträglich Änderungen oder auch eine gerätespezifische URL kein Problem darstellen.

Bevorzugt ist die Steuereinheit ausgestaltet, die Adressdaten für den zweiten Cloud-Service nach dem Empfang des Steuerbefehls in dem Konfigurationsspeicher abzulegen. Dabei ist es möglich, dass entsprechende Adressdaten bezüglich dem ersten Cloud-Service überschrieben werden, um den vorhandenen Speicherpatz des Konfigurationsspeichers optimal auszunutzen.

In einer Ausgestaltungsmöglichkeit, die alternativ oder zusätzlich vorhanden sein kann, liegen die Adressdaten für den zweiten Cloud-Service bereits im Konfigurationsspeicher vor. So kann ein zweiter Cloud-Service oder auch mehrere weitere Cloud-Services bereits vorkonfiguriert zur Verfügung stehen. Auf den Steuerbefehl hin wird dann die Verbindung zum zweiten Cloud-Service basierend auf den gespeicherten Adressdaten hergestellt. Dadurch kann der Steuerbefehl sehr einfach gehalten sein und muss keine Daten, sondern lediglich die Anweisung an das Gerät beinhalten.

Die Steuereinheit kann dabei ausgestaltet sein, bei Empfang des Steuerbefehls den zweiten Cloud-Service aus im Konfigurations-Speicher gespeicherten übergeordneten Strukturen selbst auszuwählen. Dies kann im einfachsten Fall dadurch geschehen, dass die im Konfigurationsspeicher gespeicherten Cloud-Services zyklisch nacheinander verwendet werden.

Erfindungsgemäß ist die Steuereinheit des Geräts ausgestaltet, nach Herstellung der Verbindung zum zweiten Cloud-Service Zertifikate von diesem zu empfangen und zu speichern. Bei den Zertifikaten handelt es sich beispielsweise um digitale Zertifikate nach dem ITU-T Standard X.509. Diese digitalen Zertifikate erlauben unter anderem die sichere Kommunikation über das Internet, beispielsweise mittels dem https-Protokoll und das digitale Signieren von Nachrichten wie beispielsweise emails.

In einer Ausgestaltung der Erfindung ist die Steuereinheit des Geräts ausgestaltet, die Zertifikate von einer speziellen Adresse zu empfangen. Diese spezielle Adresse kann beispielsweise eine speziell für den Download der Zertifikate beim zweiten Cloud-Service bereitgestellt Adresse sein.

In einer alternativen Ausgestaltung ist die Steuereinheit des Geräts ausgestaltet, eine Identifikationsinformation zum zweiten Cloud-Service zu senden und die Zertifikate als Antwort auf die Identifikationsinformation zu empfangen. In diesem Fall wird also keine Adresse zur Verfügung gestellt, sondern eine direkte Kommunikation verwendet. Die Identifikationsinformation kann beispielsweise eine Seriennummer sein oder die Kombination aus einer Seriennummer, einem Gerätetyp, einem Usernamen und dem aktuellen Datum.

Die Steuereinheit des Gerätes kann ferner ausgestaltet sein, den Steuerbefehl aus einer lokalen Verbindung, insbesondere einer Bluetooth- oder WLAN-Verbindung zu empfangen. Dadurch kann der Steuerbefehl aus einem lokal vorhandenen PC oder mobilen Endgerät wie einem Smartphone oder Tablet-PC an das Gerät gegeben werden. In einer besonderen Ausgestaltung ist die Steuereinheit ausgestaltet, den Steuerbefehl ausschließlich aus einer lokalen Verbindung zu empfangen. Insbesondere kann die Steuereinheit ausgestaltet sein, Steuerbefehle aus dem Internet abzuweisen.

Alternativ ist es aber auch möglich, dass die Steuereinheit ausgestaltet ist, den Steuerbefehl aus einer Quelle anzunehmen, die das Gerät nur über das Internet erreichen kann, beispielsweise eine übergeordnete Steuerung für eine Mehrzahl solcher Geräte, die beispielsweise beim Hersteller solcher Geräte vorhanden sein kann oder die erste oder die zweite übergeordnete Struktur. Dadurch ist eine entsprechende Steuerung einer Mehrzahl solcher Geräte durch eine zentrale Instanz möglich. Ebenso wird dadurch die Steuerung eines Geräts ermöglicht, dessen Aufstellungsort es schwer erreichbar macht. Eine solche übergeordnete Steuerung kann auch als provisioning service bezeichnet werden. Obwohl der provisioning service und ein Cloud-Service technisch ähnlich realisiert sein kann, nämlich in Form eines oder mehrerer Internet-Server, ist ihr Zweck völlig verschieden. So ist der provisioning service typischerweise in der Kontrolle des Herstellers des Geräts, nicht so aber die Cloud-Services. Auch ist der Funktionsumfang des provisioning services üblicherweise eingeschränkt, um einen möglichst sicheren Betrieb zu ermöglichen. Die wesentliche Eigenschaft des provisioning services ist die langfristige sichere Erreichbarkeit unter einer festliegenden Internet-Adresse, damit auch Geräte, die beispielsweise ein Jahr in einem Warenlager lagen, sicher angebunden werden können. Cloud-Services hingegen sind ständiger technischer und inhaltlicher Entwicklung unterworfen.

Die Steuereinheit kann ausgestaltet sein, den Steuerbefehl in einer http-push-Nachricht zu empfangen.

Die Steuereinheit des Geräts kann ausgestaltet sein, bei der Herstellung der Verbindung zum zweiten Cloud-Service die Verbindung zum Cloud-Service zu beenden. Mit anderen Worten wird also keine zweite Verbindung hergestellt, sondern die Verbindung zum ersten Cloud-Service durch die Verbindung zum zweiten Cloud-Service ersetzt. Dabei kann die Verbindung zu beiden übergeordneten Strukturen kurzfristig bestehen, wenn das für den Empfang der Zertifikate oder andere Übergabe-Vorgänge vorteilhaft ist.

Eine weitere Lösung für die sich stellende Aufgabe besteht in einem erfindungsgemäßen Verfahren zur Verbindung eines beschriebenen Geräts, das mit einem ersten Cloud-Service verbunden ist, mit einem zweiten Cloud-Service, bei dem ein auslösendes Gerät einen Steuerbefehl an das Gerät überträgt und das Gerät als Reaktion auf den Steuerbefehl eine Verbindung mit dem zweiten Cloud-Service herstellt. Dabei bewirkt erfindungsgemäß das auslösende Gerät in dem zweiten Cloud-Service die Bereitstellung von Zertifikaten. Das Gerät empfängt die Zertifikate von dem zweiten Cloud-Service.

Das auslösende Gerät kann dabei ein Smartphone, ein Tablet-PC, ein PC oder ein Cloud-Service sein. Es bewirkt im Zusammenspiel mit dem zweiten Cloud-Service und dem Gerät eine Änderung der Verbindung des Geräts zum Cloud-Service.

Dabei kann vorteilhaft das auslösende Gerät vom zweiten Cloud-Service eine für die Bereitstellung der Zertifikate für das Gerät erzeugte Adresse erhalten und diese Adresse an das Gerät übermitteln. Bevorzugt sind die Zertifikate von dieser Adresse nur begrenzt empfangbar, beispielsweise nur einmal downloadbar, um eine unberechtigte Verwendung zu unterbinden.

In einer alternativen Ausgestaltung übermittelt das auslösende Gerät eine Identifikationsinformation für das Gerät an den zweiten Cloud-Service. Übermittelt das Gerät selbst in der Folge die Identifikationsinformation an die zweite übergeordnete Struktur, dann übermittelt der zweite Cloud-Service nach Erhalt der übereinstimmenden Identifikationsinformation die Zertifikate an das Gerät.

Im Folgenden wird die Erfindung anhand der in den Figuren dargestellten Ausführungsbeispiele näher beschrieben und erläutert.

Es zeigen schematisch:
Figur 1 eine Fertigungsmaschine mit Verbindung zu einem internet-basierten Cloud-Service
Figur 2 der Zustand der Fertigungsmaschine nach einem ersten Schritt zur Verbindung mit einem weiteren internet-basierten Cloud-Service
Figur 3 der Zustand der Fertigungsmaschine nach einem zweiten Schritt zur Verbindung mit einem weiteren internet-basierten Cloud-Service

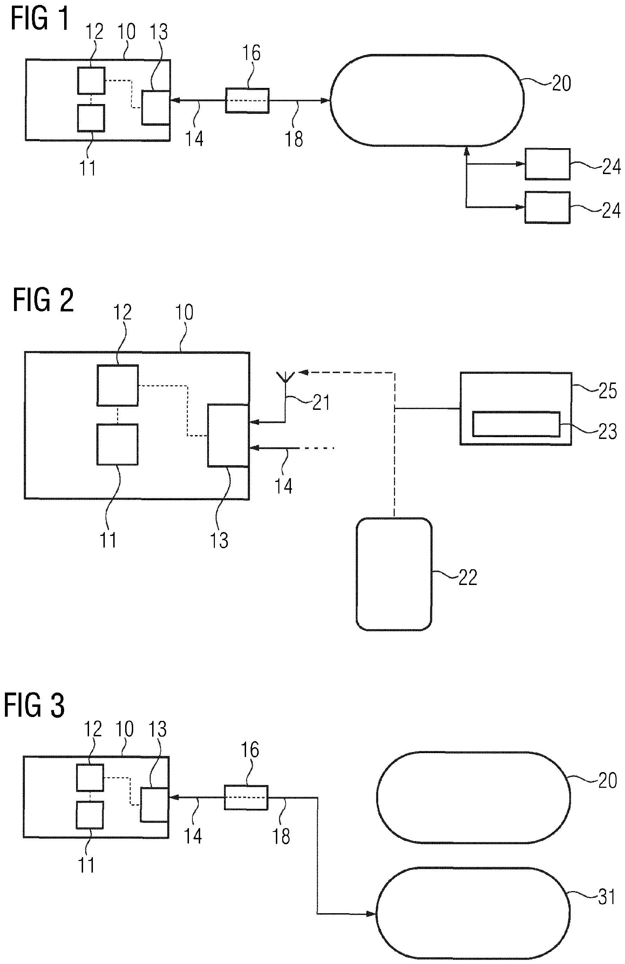

Figur 1 zeigt eine schematisierte Internet-Verbindung zwischen einer Fertigungsmaschine 10, beispielsweise einer Fräse, und einem ersten internet-basierten Cloud-Service 20, hier beispielsweise Azure. Die Verbindung verwendet beispielsweise das bekannte MQTT-Protokoll (Message Queuing Telemetry Transport). Die Fräse umfasst zur Herstellung der Verbindung einen Mikrocontroller 12 und eine Kommunikations-Schnittstelle 13, die beispielsweise eine kabelgebundene LAN-Verbindung 14 zu einem Router 16 herstellt. Der Router 16 seinerseits ist mit dem Internet 18 verbunden und ermöglicht somit den Datenaustausch zwischen der Fertigungsmaschine 10 und dem ersten Cloud-Service 20.

Die zur Herstellung der Verbindung mit dem ersten Cloud-Service nötigen Daten wie beispielsweise Internet-Adressdaten und Zertifikate sind in einem Konfigurations-Speicher 11 in der Fertigungsmaschine 10 hinterlegt. Der Konfigurations-Speicher 11 muss dabei kein eigenständiges Element sein, sondern kann ein Teil des Mikrocontrollers 12 sein. Der Mikrocontroller 12 wird von einer Firmware gesteuert, die ebenfalls gespeichert ist und im Zuge der Bereitstellung der Fertigungsmaschine 10 in diese aufgespielt wurde.

In diesem ersten Zustand, der in der Figur 1 dargestellt wird, kann die Fertigungsmaschine 10 beispielsweise Messdaten oder Daten zu ihrem eigenen Zustand an den ersten Cloud-Service 20 übertragen. Der erste Cloud-Service 20 empfängt diese Daten und verarbeitet sie weiter, indem sie beispielsweise gespeichert oder an Abonnenten (Subscriber) 24 für die Daten der Fertigungsmaschine 10 weitergeleitet werden.

Figur 2 zeigt die Fertigungsmaschine 10 zu einem späteren Zeitpunkt. Durch einen Steuerbefehl 25, den die Fertigungsmaschine 10 empfangen hat, wird sie in einen Konfigurationsmodus versetzt, in dem Änderungen an der Konfiguration der Fertigungsmaschine 10 vorgenommen werden können, beispielsweise Änderungen in Bezug auf die Verbindung mit dem ersten Cloud-Service 20.

Der Steuerbefehl wird in diesem Beispiel von einem mobilen Gerät, beispielsweise einem Smartphone 22 ausgesandt und erreicht die Fertigungsmaschine 10 über eine Bluetooth-Verbindung 21. Der Steuerbefehl 25 kommt also von einem anderen Gerät, das sich in der direkten Umgebung der Fertigungsmaschine 10 befindet. Der Steuerbefehl 25 kann von einem lokalen Gerät auch über eine (W)LAN-Verbindung übermittelt werden.

Eine weitere, nicht beanspruchte Möglichkeit für die Erzeugung des Steuerbefehls 25 besteht darin, dass der Steuerbefehl 25 in der Fertigungsmaschine 10 selbst durch eine Bedienung des Geräts erstellt wird. Beispielsweise kann die Fertigungsmaschine 10 ein grafisches Bedienfeld aufweisen, in dem ein Menü beispielsweise einen Menüpunkt "Wechsel des Cloud-Services" vorsieht. Eine Auswahl dieses Menüpunkts entspricht dem Steuerbefehl 25 und bewirkt intern eine entsprechende Abarbeitung. Alternativ zu einem grafischen Bedienfeld können natürlich auch einfachere Möglichkeiten vorgesehen sein, um eine Änderung der Konfiguration der Fertigungsmaschine 10 zu bewirken. Beispielsweise kann die Fertigungsmaschine 10 mehrere Bedientasten aufweisen. Dabei ist jede der Bedientasten direkt mit der Anwahl eines bestimmten Cloud-Services 20, 31 verknüpft. Das Drücken einer der Bedientasten stellt einen Steuerbefehl 25 dar, der einen entsprechenden Wechsel des Cloud-Services 20, 31 bewirkt, sofern die Bedientaste mit einem anderen Cloud-Anbieter 20, 31 verknüpft ist als demjenigen, mit dem das Gerät derzeit verbunden ist.

In anderen Ausführungsformen kann der Steuerbefehl 25 auch von einem örtlich weit entfernten Gerät an die Fertigungsmaschine 10 versendet werden, beispielsweise ebenfalls über das Internet. Auf diese Weise kann der Steuerbefehl 25 auch von einem entfernt stehenden PC zur Fertigungsmaschine 10 übermittelt werden. Es besteht auch die Möglichkeit, dass der Steuerbefehl 25 von einem Cloud-Service 20, 31 an die Fertigungsmaschine 10 übertragen wird, wobei das durch den gegenwärtig angebundenen Cloud-Service 20 geschehen kann oder aber durch einen anderen Cloud-Service 31, der dadurch bewirkt, dass eine Verbindung zu ihm erst hergestellt wird.

Im vorliegenden Ausführungsbeispiel enthält der Steuerbefehl 25 Adressdaten 23 in Form einer URL für einen zweiten Cloud-Service 31. Im Konfigurationsmodus übernimmt die Fertigungsmaschine 10 die Adressdaten 23 und stellt eine Verbindung zu der durch die Adressdaten gegebenen Adresse im Internet her. Dadurch wird eine Verbindung zum zweiten Cloud-Service 31 erstellt.

In alternativen Ausgestaltungen können die Adressdaten 23 auch bereits im Konfigurations-Speicher 11 der Fertigungsmaschine 10 hinterlegt sein. In diesem Fall muss der Steuerbefehl 25 die Adressdaten 23 nicht enthalten. Stattdessen kann entweder gar keine Information über den zweiten Cloud-Service 31 im Steuerbefehl 25 enthalten sein oder aber eine Kennung für den zweiten Cloud-Service 31, anhand derer die Fertigungsmaschine 10 auszuwählende Adressdaten 23 aus dem Konfigurations-Speicher 22 bestimmen kann. Enthält der Steuerbefehl 25 keinerlei Adressdaten 23, kann der Mikrocontroller 12 der Fertigungsmaschine 10 selbst eine Auswahl aus im Konfigurations-Speicher 11 oder an einer fest vorgegebenen Adresse im Internet ermittelbaren Cloud-Services 31 treffen.

Nach der Herstellung der Verbindung mit dem zweiten Cloud-Service 31 ergibt sich die in Fig. 3 dargestellte Situation, in der die Fertigungsmaschine 10 über den Router 16 und das Internet 18 eine Verbindung zu dem zweiten Cloud-Service 31 hat. Die Verbindung zu dem ersten Cloud-Service 20 ist unterbrochen, wird also in dieser Ausführungsform nicht mehr aufrechterhalten. In alternativen Ausgestaltungen können beide Verbindungen auch parallel zueinander aufrechterhalten werden.

Es ist vorteilhaft und in manchen Anwendungen erforderlich, den Austausch der Daten zwischen der Fertigungsmaschine 10 und dem zweiten Cloud-Service 31 abzusichern und damit gegen unbefugten Zugriff zu schützen. Dazu kann die Fertigungsmaschine 10 die Gelegenheit bekommen, Zertifikate, beispielsweise nach dem Standard X.509, vom zweiten Cloud-Service 31 zu erhalten, mit denen eine Verschlüsselung und damit Absicherung durchgeführt werden kann. Auch kann dadurch eine gegenseitige Identifikation durchgeführt werden.

Um die Zertifikate zu erhalten, können diese beispielsweise vom zweiten Cloud-Service 31 unter einer Internet-Adresse, also URL, bereitgestellt werden für den Download. Eine solche URL könnte beispielsweise "cloudser-vice.org/Z_123456_20200102/" lauten. Dabei kann 123456 beispielsweise eine Identifikationsnummer, wie z.B. die Seriennummer der Fertigungsmaschine 10 sein oder eine andere Bytefolge, die dem zweiten Cloud-Service 31 und der Fertigungsmaschine 10 gleichermaßen bekannt ist. In Verknüpfung mit dem Datum kann so die Fertigungsmaschine 10 diese URL anhand von ihr bekannten Daten bestimmen, ohne sie von außen geliefert zu bekommen.

Eine andere Möglichkeit besteht darin, dass das Smartphone 22 oder der Tablet-PC, von dem aus der Steuerbefehl 25 an die Fertigungsmaschine 10 gegeben wird, selbst Verbindung zum Cloud-Service 31 aufnimmt. Aufgrund um Größenordnungen höheren Verarbeitungsgeschwindigkeit und Speichergröße, die bei solchen Geräten gegenüber einer Fertigungsmaschine 10 mit dem Mikrocontroller 12 besteht, stellt es üblicherweise kein Problem dar, vom Smartphone 22 aus solch verwaltenden Schritte durchzuführen. Der Cloud-Service 31 stellt wiederum dem Smartphone eine URL zur Verfügung, unter der die Zertifikate erhältlich sind. Das Smartphone 22 übermittelt diese URL an die Fertigungsmaschine 10. Das kann bereits mit dem Steuerbefehl 25 erfolgen.

Hat die Fertigungsmaschine 10 eine entsprechende URL zur Verfügung, führt sie den Download der Zertifikate durch. Es ist für die Sicherheit vorteilhaft, wenn auf Seite des Cloud-Service 31 sichergestellt wird, dass ein solcher Download nur einmalig möglich ist. Alternativ kann auch ein öffentlicher Schlüssel der Fertigungsmaschine 10 an den Cloud-Service 31 übermittelt werden und eine Verschlüsselung der Zertifikate damit durchgeführt werden, was die Verwendung außerhalb der Fertigungsmaschine 10 erschwert.

Insgesamt wird so ein Endgerät mit einer Anbindung an einen Cloud-Service geschaffen, dass trotz der erheblichen Einschränkungen, die durch eine Steuerung mittels Mikrocontroller 12 gegeben sind, eine flexible Handhabung der Anbindung an das Internet der Dinge ermöglicht.

Es versteht sich dabei, dass die Fertigungsmaschine 10 nur ein Anwendungsbeispiel darstellt und die Erfindung auch auf anderen Geräten und anderen Gerätetypen anwendbar ist. Beispielsweise kann die Erfindung vorteilhaft im Zusammenhang mit Saug- oder Mährobotern oder auch industriellen Steuerungen zum Einsatz kommen.

### Bezugszeichenliste

- 10: Fertigungsmaschine
- 11: Konfigurations-Speicher
- 12: Mikrocontroller
- 13: Kommunikationseinrichtung
- 14: LAN-Verbindung
- 16: Router
- 18: Internet
- 20, 31: Cloud-Service
- 24: Abonnenten
- 21: Bluetooth-Verbindung
- 22: Smartphone
- 23: Adressdaten
- 25: Steuerbefehl

## Patentansprüche

1. System, umfassend ein Gerät (10) zum Einsatz im Internet der Dinge sowie ein auslösendes Gerät, wobei das Gerät (10) umfasst:
- eine Kommunikations-Schnittstelle (13),
- einen Konfigurationsspeicher (11),
- einen Mikrocontroller (12) mit einer Firmware als Steuereinheit zur Steuerung der Kommunikations-Schnittstelle (13), wobei die Steuereinheit ausgestaltet ist,
- eine Verbindung mit einem ersten Cloud-Service (20) basierend auf einer im Konfigurationsspeicher (11) gespeicherten Konfiguration aufzunehmen,
- einen Steuerbefehl (25) zu empfangen und bei Empfang des Steuerbefehls (25) eine Verbindung zu einem zweiten Cloud-Service (31) herzustellen,
- mit dem Steuerbefehl (25) Adressdaten (23) für den zweiten Cloud-Service (31) zu empfangen und die Verbindung unter Verwendung der Adressdaten (23) herzustellen,
wobei das auslösende Gerät (22) ausgestaltet ist, den Steuerbefehl (25) an das Gerät (10) zu übertragen,
**dadurch gekennzeichnet, dass**
- die Steuereinheit ausgestaltet ist, nach Herstellung der Verbindung zum zweiten Cloud-Service (31) Zertifikate vom zweiten Cloud-Service (31) zu empfangen und zu speichern,
- das auslösende Gerät (22) ausgestaltet ist, im zweiten Cloud-Service (31) die Bereitstellung von begrenzt empfangbaren Zertifikaten zu bewirken.

2. System nach Anspruch 1, bei dem die Steuereinheit ausgestaltet ist, nach der Verbindungsaufnahme mit dem ersten Cloud-Service (20) im Betrieb anfallende Daten mit dem ersten Cloud-Service (20) uni- oder bidirektional auszutauschen, und nach der Verbindungsaufnahme mit dem zweiten Cloud-Service (31) im Betrieb anfallende Daten mit dem zweiten Cloud-Service (31) uni- oder bidirektional auszutauschen.

3. System nach Anspruch 2, bei dem die Steuereinheit ausgestaltet ist, nach der Verbindungsaufnahme mit dem ersten Cloud-Service (20) Betriebsdaten zu dem ersten Cloud-Service (20) zu senden, und nach der Verbindungsaufnahme mit dem zweiten Cloud-Service (31) Betriebsdaten zum zweiten Cloud-Service (31) zu senden, wobei die Betriebsdaten ausgewählt sind aus der nicht abschließenden Liste: Messdaten, Zeitstempel, Berechnungsergebnisse und Ansteuerbefehlsdaten für Aktoren und/oder Schnittstellen.

4. System nach einem der vorangehenden Ansprüche, bei dem die Steuereinheit ausgestaltet ist, vor der Verbindungsaufnahme mit dem ersten Cloud-Service (20) Verbindung zu einem Kommissionierungs-Server aufzunehmen und von dem Kommissionierungs-Server Adressdaten und/oder kryptographische Daten zu empfangen und basierend auf den Adressdaten und/oder kryptographischen Daten die Verbindung zum ersten Cloud-Service (20) aufzunehmen.

5. System nach einem der Ansprüche 1 bis 3, bei dem die Steuereinheit ausgestaltet ist, die Verbindungsaufnahme mit dem ersten Cloud-Service (20) basierend auf einer im Konfigurationsspeicher (11) gespeicherten Konfiguration vorzunehmen.

6. System nach einem der vorangehenden Ansprüche, bei dem die Steuereinheit ausgestaltet ist, eine Identifikationsinformation zum zweiten Cloud-Service (31) zu senden und die Zertifikate als Antwort auf die Identifikationsinformation zu empfangen.

7. System nach einem der vorangehenden Ansprüche, bei dem die Steuereinheit ausgestaltet ist, den Steuerbefehl (25) aus einer lokalen Verbindung, insbesondere einer Bluetooth-Verbindung (21) oder WLAN-Verbindung zu empfangen, insbesondere ausschließlich aus einer lokalen Verbindung zu empfangen.

8. System nach einem der vorangehenden Ansprüche, bei dem die Steuereinheit ausgestaltet ist, den Steuerbefehl (25) in einer http-push-Nachricht zu empfangen.

9. System nach einem der vorangehenden Ansprüche, bei dem die Steuereinheit ausgestaltet ist, bei Empfang des Steuerbefehls (25) den zweiten Cloud-Service (31) aus im Konfigurations-Speicher (11) gespeicherten übergeordneten Strukturen auszuwählen.

10. System nach einem der vorangehenden Ansprüche, bei dem die Steuereinheit ausgestaltet ist, bei Herstellung der Verbindung zum zweiten Cloud-Service (31) die Verbindung zum ersten Cloud-Service (20) zu beenden.

11. Verfahren zur Verbindung eines Geräts (10), das mit einem ersten Cloud-Service (20) verbunden ist, mit einem zweiten Cloud-Service (31), bei dem
- ein System nach einem der vorangehenden Ansprüche verwendet wird,
- das auslösende Gerät (22) einen Steuerbefehl (25) an das Gerät (10) überträgt,
- das Gerät (10) als Reaktion auf den Steuerbefehl (25) eine Verbindung mit dem zweiten Cloud-Service (31) herstellt, **dadurch gekennzeichnet, dass**
- das auslösende Gerät (22) im zweiten Cloud-Service (31) die Bereitstellung von begrenzt empfangbaren Zertifikaten bewirkt,
- das Gerät (10) Zertifikate vom zweiten Cloud-Service (31) empfängt.

12. Verfahren nach Anspruch 11, bei dem das auslösende Gerät (22) vom zweiten Cloud-Service (31) eine für die Bereitstellung der Zertifikate für das Gerät (10) erzeugte Adresse erhält und diese Adresse an das Gerät (10) übermittelt.

13. Verfahren nach Anspruch 11, bei dem das auslösende Gerät (10) eine Identifikationsinformation für das Gerät (10) an den zweiten Cloud-Service (31) übermittelt, das Gerät (10) die Identifikationsinformation an den zweiten Cloud-Service (31) übermittelt und der zweite Cloud-Service (31) nach Erhalt der Identifikationsinformation die Zertifikate an das Gerät (10) übermittelt oder bereitstellt.

## Claims

1. System comprising a device (10) for use in the internet of things as well as a triggering device, wherein the device (10) comprises:
- a communication interface (13),
- a configuration memory (11),
- a microcontroller (12) with firmware as a control unit for controlling the communication interface (13),
wherein the control unit is designed to
- establish a connection to a first cloud service (20) on the basis of a configuration stored in the configuration memory (11),
- receive a control command (25) and on receipt of the control command (25) set up a connection to a second cloud service (31),
- receive address data (23) for the second cloud service (31) with the control command (25) and to establish the connection using the address data (23),
wherein the triggering device (22) is designed to transmit the control command (25) to the device (10),
**characterised in that**
- after establishing the connection with the second cloud service (31), the control unit is designed to receive and store certificates from the second cloud service (31),
- the triggering device (22) is designed in the second cloud service (31) to bring about the provision of certificates which can be received on a restricted basis.

2. System according to claim 1, in which the control unit is designed to exchange data arising during operation unidirectionally or bidirectionally with the first cloud service (20) after the connection to the first cloud service (20) has been established, and to exchange data arising during operation unidirectionally or bidirectionally with the second cloud service (31) after the connection to the second cloud service (31) has been established.

3. System according to claim 2, in which the control unit is designed to send operational data to the first cloud service (20) after the connection to the first cloud service (20) has been established, and to send operational data to the second cloud service (31) after the connection to the second cloud service (31) has been established, wherein the operational data is selected from the following non-exhaustive list: measured data, time stamps, results of calculations and control command data for actuators and/or interfaces.

4. System according to one of the preceding claims, in which the control unit is designed, prior to establishing the connection to the first cloud service (20), to establish a connection to a commissioning server and to receive address data and/or cryptographic data from the commissioning server, and on the basis of the address data and/or cryptographic data to establish the connection to the first cloud service (20).

5. System according to one of claims 1 to 3, in which the control unit is designed to establish the connection to the first cloud service (20) on the basis of a configuration stored in the configuration memory (11).

6. System according to one of the preceding claims, in which the control unit is designed to send identification information to the second cloud service (31) and to receive the certificates in response to the identification information.

7. System according to one of the preceding claims, in which the control unit is designed to receive the control command (25) from a local connection, in particular a Bluetooth connection (21) or WLAN connection, in particular to receive it exclusively from a local connection.

8. System according to one of the preceding claims, in which the control unit is designed to receive the control command (25) in an http push message.

9. System according to one of the preceding claims, in which the control unit is designed, on receipt of the control command (25), to select the second cloud service (31) from higher-level structures stored in the configuration memory (11) .

10. System according to one of the preceding claims, in which the control unit is designed to terminate the connection to the first cloud service (20) when the connection to the second cloud service (31) is set up.

11. Method for connecting a device (10), which is connected to a first cloud service (20), with a second cloud service (31), in which
- a system according to one of the preceding claims is used,
- the triggering device (22) transmits a control command (25) to the device (10),
- the device (10) sets up a connection to the second cloud service (31) in response to the control command (25), **characterised in that**
- in the second cloud service (31) the triggering device (22) brings about the provision of certificates that can be received on a restricted basis,
- the device (10) receives certificates from the second cloud service (31).

12. Method according to claim 11, in which the triggering device (22) receives from the second cloud service (31) an address generated for the provision of the certificates for the device (10) and transmits said address to the device (10).

13. Method according to claim 11, in which the triggering device (10) transmits identification information for the device (10) to the second cloud service (31), the device (10) transmits the identification information to the second cloud service (31) and on receipt of the identification information the second cloud service (31) transmits or provides the certificates to the device (10).

## Revendications

1. Système, comprenant un appareil (10) à utiliser dans l'internet des objets ainsi qu'un appareil de déclenchement, dans lequel l'appareil (10) comprend :
- une interface (13) de communication,
- une mémoire (11) de configuration,
- une micro-unité (12) de commande ayant un microprogramme comme unité de commande pour la commande de l'interface (13) de communication,
dans lequel l'unité de commande est conformée pour
- enregistrer une configuration mise dans une mémoire (11) de configuration reposant sur une liaison avec un premier service (20) de nuage,
- recevoir une instruction (25) de commande et, à la réception de l'instruction (25) de commande, établir une liaison avec un deuxième service (31) de nuage,
- avec l'instruction (25) de commande, recevoir des données (23) d'adresse pour le deuxième service (31) de nuage et établir la liaison en utilisant les données (23) d'adresse,
dans lequel l'appareil (22) de déclenchement est conformé de manière à transmettre l'instruction (25) de commande à l'appareil (10),
**caractérisé en ce que**
- l'unité de commande est conformée pour, après l'établissement de la liaison avec le deuxième service (31) de nuage, recevoir des certificats du deuxième service (31) de nuage et les mettre en mémoire,
- l'appareil (22) de déclenchement est conformé pour provoquer, dans le deuxième service (31) de nuage, la mise à disposition de certificats pouvant être reçus de manière limitée.

2. Système suivant la revendication 1, dans lequel l'unité de commande est conformée pour échanger unidirectionnellement ou bidirectionnellement avec le premier service (20) de nuage des données se produisant en fonctionnement après l'enregistrement de la liaison avec le premier service (20) de nuage, et pour échanger unidirectionnellement ou bidirectionnellement avec le deuxième service (31) de nuage des données se produisant en fonctionnement après l'enregistrement de la liaison avec le deuxième service (31) de nuage.

3. Système suivant la revendication 2, dans lequel l'unité de commande est conformée pour envoyer au premier service (20) de nuage des données de fonctionnement après l'enregistrement avec la liaison avec le premier service (20) de nuage et pour envoyer au deuxième service (31) de nuage des données de fonctionnement après l'enregistrement de la liaison avec le deuxième service (31) de nuage, dans lequel les données de fonctionnement sont choisies dans la liste non exclusive : données de mesure, estampilles temporelles, résultats de calcul et données d'instruction de commande d'actionneurs et/ou d'interfaces.

4. Système suivant l'une des revendications précédentes, dans lequel l'unité de commande est conformée pour enregistrer, avant l'enregistrement de liaison avec le premier service (20) de nuage, une liaison avec un serveur de commissionnement et pour recevoir du serveur de commissionnement des données d'adresse et/ou des données cryptographiques et, sur la base des données d'adresse et/ou des données cryptographiques, enregistrer la liaison avec le premier service (20) de nuage.

5. Système suivant l'une des revendications 1 à 3, dans lequel l'unité de commande est conformée pour effectuer l'enregistrement de liaison avec le premier service (20) de nuage sur la base d'une configuration mise dans la mémoire (11) de configuration.

6. Système suivant l'une des revendications précédentes, dans lequel l'unité de commande est conformée pour envoyer une information d'identification au deuxième service (31) de nuage et pour recevoir les certificats comme réponse à l'information d'identification.

7. Système suivant l'une des revendications précédentes, dans lequel l'unité de commande est conformée pour recevoir l'instruction (25) de commande à partir d'une liaison locale, en particulier d'une liaison (21) Bluetooth ou d'une liaison WLAN, en particulier pour la recevoir exclusivement à partir d'une liaison locale.

8. Système suivant l'une des revendications précédentes, dans lequel l'unité de commande est conformée pour recevoir l'instruction (25) de commande dans un message http-push.

9. Système suivant l'une des revendications précédentes, dans lequel l'unité de commande est conformée pour choisir, à la réception de l'instruction (25) de commande, le deuxième service (31) de nuage dans des structures supérieures hiérarchiquement mises dans la mémoire (11) de configuration.

10. Système suivant l'une des revendications précédentes, dans lequel l'unité de commande est conformée pour, à l'établissement de la liaison avec le deuxième service (31) de nuage, mettre fin à la liaison avec le premier service (20) de nuage.

11. Procédé de liaison d'un appareil (10), qui est relié à un premier service (20) de nuage comprenant un deuxième service (31) de nuage, dans lequel
- on utilise un système suivant l'une des revendications précédentes,
- l'appareil (22) de déclenchement transmet une instruction (25) de commande à l'appareil (10),
- l'appareil (10), en réaction à l'instruction (25) de commande, établit une liaison avec le deuxième service (31) de nuage,
**caractérisé en ce que**
- l'appareil (22) de déclenchement provoque dans le deuxième service (31) de nuage la mise à disposition de certificats pouvant être reçus de manière limitée,
- l'appareil (10) reçoit des certificats du deuxième service (31) de nuage.

12. Procédé suivant la revendication 11, dans lequel l'appareil (22) de déclenchement reçoit du deuxième service (31) de nuage une adresse produite pour la mise à disposition des certificats pour l'appareil (10) et transmettre cette adresse à l'appareil (10).

13. Procédé suivant la revendication 11, dans lequel l'appareil (10) de déclenchement transmet au deuxième service (31) de nuage une information d'identification de l'appareil (10), l'appareil (10) transmet l'information d'identification au deuxième service (31) de nuage et le deuxième service (31) de nuage transmet ou met à disposition, après réception de l'information d'identification, les certificats à l'appareil (10).
